(19) Europäisches Patentamt
European Patent Office
Office européen des brevets

(11) **EP 4 614 707 A1**

(12) **EUROPEAN PATENT APPLICATION**
published in accordance with Art. 153(4) EPC

(43) Date of publication:
**10.09.2025 Bulletin 2025/37**

(21) Application number: **24825302.3**

(22) Date of filing: **20.06.2024**

(51) International Patent Classification (IPC):
**H01M 50/342** (2021.01)    **H01M 50/143** (2021.01)
**H01M 50/15** (2021.01)    **H01M 10/04** (2006.01)
**F16K 17/00** (2006.01)    **F16K 17/40** (2006.01)

(52) Cooperative Patent Classification (CPC):
Y02E 60/10

(86) International application number:
**PCT/CN2024/100365**

(87) International publication number:
**WO 2024/260415 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.06.2023 CN 202321588793 U**

(71) Applicant: **Eve Power Co., Ltd.**
**Jingmen, Hubei 448000 (CN)**

(72) Inventors:
• **HE, Xiaowu**
**Jingmen, Hubei 448000 (CN)**
• **SHU, Kuanjin**
**Jingmen, Hubei 448000 (CN)**

• **ZHENG, Xu**
**Jingmen, Hubei 448000 (CN)**
• **AN, Suli**
**Jingmen, Hubei 448000 (CN)**
• **WU, Xueyin**
**Jingmen, Hubei 448000 (CN)**
• **HUANG, Jinhai**
**Jingmen, Hubei 448000 (CN)**
• **WANG, Junmin**
**Jingmen, Hubei 448000 (CN)**
• **HE, Wei**
**Jingmen, Hubei 448000 (CN)**

(74) Representative: **Berggren Oy**
**P.O. Box 16**
**Eteläinen Rautatiekatu 10A**
**00101 Helsinki (FI)**

(54) **COVER PLATE ASSEMBLY AND BATTERY CELL**

(57) A cover plate assembly (10) and a cell (100). The cell (100) includes a housing (20), an electrode core (30) and a cover plate assembly (10). The housing (20) forms a receiving cavity with an opening, the electrode core (30) is disposed within the receiving cavity, and the cover plate assembly (10) is configured to close the opening of the receiving cavity. The cover plate assembly (10) includes a support body (101), a groove (221) is provided in the support body (101), and the area formed and enclosed by the inner ring of the groove (221) is defined as S, where S satisfies: $S=(K \times C)/(T \times V)$. K is a gas production coefficient of the electrode core, C is a capacity of the electrode core; T is pressure-relief time; and V is a pressure-relief speed.

EP 4 614 707 A1

FIG. 1

**Description**

This disclosure claims priority to Chinese Patent Application No. CN202321588793.4 filed with the China National Intellectual Property Administration (CNIPA) on June 21, 2023, the content of which is incorporated herein by reference in its entirety.

TECHNICAL FIELD

The present disclosure relates to the field of battery technology, and in particular to a cover plate assembly and a cell.

BACKGROUND

To alleviate the explosion of a cell due to thermal runaway and the like during use, an explosion-proof pressure-relief structure is usually provided at a cover plate assembly. In the related art, a commonly-used pressure-relief structure is to provide a groove on a pressure-relief member, and the groove forms a region with weak strength. When the gas pressure in the cell is too large, the cell is prioritized to explode from the groove, thereby realizing a directional pressure relief and improving the safety performance of the cell.

SUMMARY

However, in the related art, the groove provided is usually estimated using empirical values, which may bring about the following problems: (1) a large amount of gas produced during the life cycle of the cell leads to early exploding of the pressure-relief structure and failure of the cell; (2) the cell encounters an abnormality such as a short circuit and a rapid increase in the amount of gas production, which leads to a large rate of gas overflow when the pressure-relief structure explodes, causing a safety hazard.

The present disclosure provides a cover plate assembly. The cover plate assembly, configured to close a housing containing an electrode core, includes a support body. A groove is provided in the support body, and the area formed and enclosed by the inner ring of the groove is defined as S, S satisfying:

$$S = \frac{K \times C}{T \times V}.$$

K is a gas production coefficient of the electrode core, C is a capacity of the electrode core; T is pressure-relief time; and V is a pressure-relief speed.

The present disclosure further provides a cell. The cell includes a housing, an electrode core, and the above cover plate assembly. An opening is on a side of the housing, the electrode core is disposed within the housing, and the cover plate assembly is configured to close the opening.

BENEFICIAL EFFECT

Regarding the cover plate assembly provided by this disclosure, the area enclosed by the groove is the effective pressure-relief area of the cover plate assembly, and the effective pressure-relief area is jointly limited by the gas production coefficient of the electrode core, the capacity of the electrode core, the pressure-relief time, and the pressure-relief speed. Based on the above, on the one hand, it is ensured that the groove is not easy to burst open in advance under the premise of the normal gas production of the cell, thereby preventing early failure of the cell; on the other hand, it is possible to prevent a large rate of gas overflow when the pressure is relieved from the cell, thereby ensuring the safety of the pressure-relief process.

Regarding the cell provided by this disclosure, the cover plate assembly as described above is provided, thereby alleviating the problem of early failure of the cell, and the safety of the pressure-relief process is good.

BRIEF DESCRIPTION OF THE DRAWINGS

FIG. 1 is an exploded view of a cell according to some embodiments of the present disclosure.
FIG. 2 is a schematic diagram of the structure of a pressure-relief member according to some embodiments of the present disclosure.

FIG. 3 is a schematic diagram of a cover plate body and a pressure-relief member in a mating state according to some embodiments of the present disclosure.

FIG. 4 is a schematic diagram of the structure of a cover plate body and pins according to some embodiments of the present disclosure.

In the drawings:

10, cover plate assembly; 101, support body; 1, cover plate body; 11, mounting hole; 111, first hole; 112, second hole; 2, pressure-relief member; 21, connection portion; 22, body portion; 221, groove; 2211, semi-circular arc segment; 2212, straight-line segment; 3, protective film; 31, aerated hole; 4, pole; 5, pin;

20, housing;

30, electrode core;

100, cell.

## DETAILED DESCRIPTION

In the description of the embodiments of the present disclosure, unless otherwise explicitly specified and limited, the term "connected to each other", "connected" or "fixed" is to be construed in a broad sense, for example, as fixedly connected, detachably connected or integrated; mechanically connected or electrically connected; directly connected to each other or indirectly connected to each other via an intermediary; or internally coupled or interactional between two components. For those of ordinary skill in the art, the specific meanings of the above terms in the embodiments of the present disclosure can be construed depending on specific situations.

In the embodiments of the present disclosure, unless otherwise explicitly specified and limited, when a first feature is described as "on" or "below" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is at a horizontally higher level than the second feature. When the first feature is described as "under", "below" or "underneath" the second feature, the first feature is right under, below or underneath the second feature or the first feature is obliquely under, below or underneath the second feature, or the first feature is at a horizontally lower level than the second feature.

In the description of the embodiments of the present disclosure, the terms "on", "below", "right" and other orientation or position relationships are based on the orientation or position relationships shown in the drawings, for facilitating description and simplifying operation, and these relationships do not indicate or imply that the referred device or element has a specific orientation and is constructed and operated in a specific orientation. Therefore, it is not to be construed as limiting the present disclosure. In addition, the terms "first" and "second" are only used for descriptive purposes and have no special meaning.

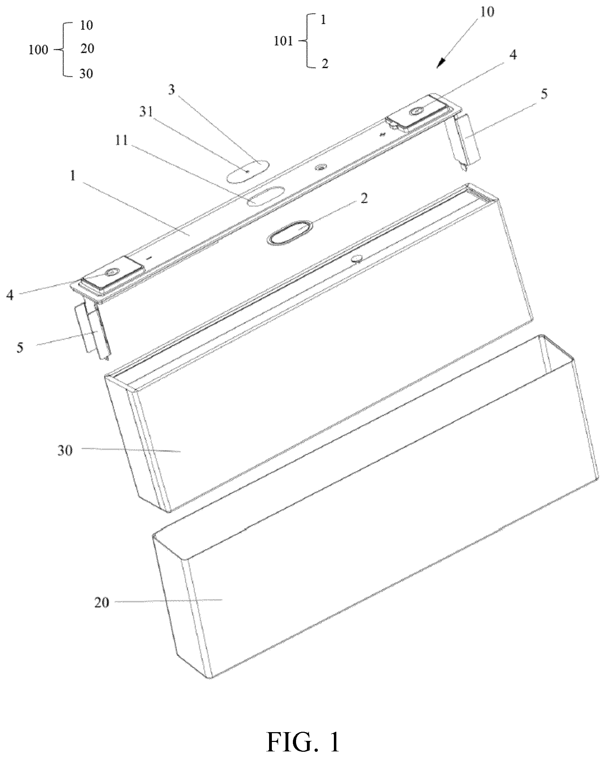

The present embodiments provide a cover plate assembly 10 and a cell 100, and the following description is made by taking a rectangular cell as an example of the cell 100. As shown in FIG. 1, the cell 100 includes a housing 20, an electrode core 30, and the cover plate assembly 10. The housing 20 forms a receiving cavity with an opening on a side, the electrode core 30 is disposed within the receiving cavity of the housing 20, and the cover plate assembly 10 is configured to close the opening of the housing 20 to close the receiving cavity. In the embodiments, the housing 20 is constructed as a cuboid and the opening is formed on the side of the housing 20. The number of electrode cores 30 may be one, two, or more, without limitation herein. Each of the electrode cores 30 has a positive tab and a negative tab. The cover plate assembly 10 includes a support body 101, two poles 4, and two pins 5. Of the two pins 5, one pin 5 is connected to the positive tab of the electrode core 30 and the other pin 5 is connected to the negative tab of the electrode core 30. The support body 101 is constructed as a cuboid and closes the opening of the housing 20. The two poles 4 are connected to a cover plate body 1, and the two poles 4 are connected to the two pins 5 respectively after penetrating the support body 101 from the outside to the inside, which therefore allows the current of the electrode core 30 to be extracted through the pins 5 and the poles 4 sequentially.

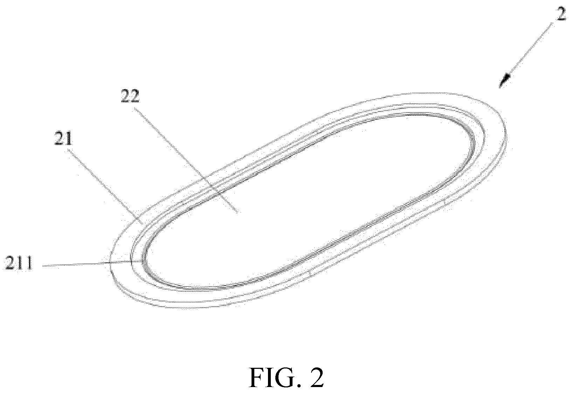

As shown in FIGS. 1 and 2, to alleviate the explosion of the cell 100 due to thermal runaway of the electrode core 30 and the like during use, the support body 101 is provided with a groove 221, and the groove 221 is provided such that a region with weak strength is formed in the support body 101. When the gas pressure in the receiving cavity of the cell 100 is too large, the cell 100 is prioritized to explode from the groove 221, thereby realizing a directional pressure relief to prevent the explosion of the cell 100. In the embodiments, the support body 101 includes the cover plate body 1 and a pressure-relief member 2, the cover plate body 1 is provided with a mounting hole 11, and the pressure-relief member 2 is detachably connected to the mounting hole 11, thereby ensuring the hermeticity of the cell 100. The groove 221 is provided on the pressure-relief member 2. The support body 101 is provided to include two parts, i.e., the cover plate body 1 and the pressure-relief member 2, thereby facilitating adjusting the strength of the materials selected for the two parts as needed. In other embodiments, the support body 101 may also be set as a separate plate member, and the groove 221 is directly formed on the plate member.

In the related art, the size of the groove 221 is usually estimated using empirical values, which may bring about the following problems: (1) a large amount of gas produced during the life cycle of the cell 100 leads to early exploding of the pressure-relief structure and failure of the cell 100; (2) the cell 100 encounters an abnormality such as a short circuit and a rapid increase in the amount of gas production, which leads to a large rate of gas overflow when the pressure-relief structure explodes, causing a safety hazard.

In this regard, in these embodiments, the area formed and enclosed by the inner ring of the groove 221 is defined as S. In fact, S constitutes an effective pressure-relief area when the pressure is relieved from the cell 100. S satisfies:

$$| \; S = \frac{K \times C}{T \times V} \qquad \text{Formula (1)}$$

In Formula (1), K is the gas production coefficient of the electrode core 30, C is the capacity of the electrode core 30; T is the pressure-relief time; and V is the pressure-relief speed.

In the embodiments, the design logic of Formula (1) is: total amount of pressure-relief gas = pressure-relief speed $\times$ pressure-relief time $\times$ effective pressure-relief area, where K $\times$ C constitutes the total amount of pressure-relief gas. In designing the enclosing area of the groove 221 on the pressure-relief member 2, the pressure-relief time T and the pressure-relief speed V may be set, while the gas production coefficient K of the electrode core 30 and the capacity C of the electrode core 30 are the performance parameters of the electrode core 30 itself, and thus a quantitative value of the effective pressure-relief area S may be obtained through the above Formula (1). The effective pressure-relief area S of this quantitative value can ensure that when the cell 100 produces gas normally, the pressure-relief member 2 is not easy to burst open in advance, thereby preventing the cell 100 from failing in advance; and can also prevent a large rate of gas overflow when the pressure is relieved from the cell 100, thereby ensuring the safety of the pressure-relief process.

In the embodiments, the pressure-relief speed V = 1m/s~17m/s, which range of pressure-relief speed is a safe pressure-relief speed, and the harm to the personal safety of the user is low when the pressure is relieved from the cell 100. Specifically, the value of V may be 1 m/s, 5 m/s, 10 m/s, 15 m/s, 17 m/s and the like. Optionally, the pressure-relief time T = 10s~30s. Specifically, the value of T may be 10s, 15s, 20s, 25s, 30s and the like. Optionally, in the embodiments, the electrode core 30 has a gas production coefficient K, where K=0.20~2.5. It is understood that the range of the gas production coefficient K is only a range.

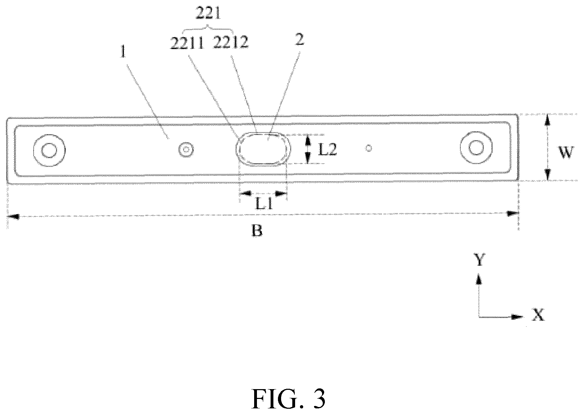

In the embodiments, as shown in FIG. 3, the groove 221 includes two semi-circular arc segments 2211 and two straight-line segments 2212, and the semi-circular arc segments 2211 and the straight-line segments 2212 are alternately provided and sequentially connected to form a closed shape. The boundary of this shape is smooth, so the groove 221 is not easy to generate stress concentration locally, and when the gas pressure inside the cell 100 is too large, the groove 221 can be uniformly burst at the various positions along the boundary. In the embodiments, the first direction and the second direction are defined as two directions perpendicular to each other in a plane in which the cover plate body 1 is located, where the X-direction in FIG. 3 indicates the first direction and the Y-direction indicates the second direction. The maximum size in the first direction of the shape enclosed by the groove 221 is L1, the maximum size in the second direction of the shape is L2, and the area enclosed by the inner ring of the groove 221 is:

$$S = (L1 - L2) \times L2 + \frac{\pi \, (L2)^2}{4} \qquad \text{Formula (2)}$$

Therefore, the values of L1 and L2 may be set by combining Formula (1) and Formula (2). In other embodiments, the shape enclosed by the groove 221 may also be a circle, a rectangle, or other irregular figure, and is not specifically limited herein.

In some embodiments, as shown in FIG. 3, the cover plate body 1 has a size B in the first direction, exemplarily, B $\geq$ L1+5 mm. In this formula, 5mm is the spacing reserved for the connection of the pressure-relief member 2 to the cover plate body 1 in the first direction, thereby ensuring that the pressure-relief member 2 is reliably connected to the cover plate body 1. Similarly, W $\geq$ L2+5 mm. In this formula, 5mm is the spacing reserved for the connection of the pressure-relief member 2 to the cover plate body 1 in the second direction, thereby ensuring that the pressure-relief member 2 is reliably connected to the cover plate body 1.

In the embodiments, as shown in FIG. 2, the pressure-relief member 2 includes a body portion 22 and a connection portion 21. The groove 221 is provided in the body portion 22, and the connection portion 21 is provided around the body portion 22. The thickness of the connection portion 21 is greater than that of the body portion 22, and the connection portion 21 is welded with the cover plate body 1. The thickness of the connection portion 21 is greater than that of the body portion 22, thereby ensuring that the connection portion 21 has sufficient thickness, and thus the welded connection between the pressure-relief member 2 and the cover plate body 1 is solid. In the embodiments, both the cover plate body 1 and the pressure-relief member 2 are made of aluminum, which facilitates the welding connection between the cover plate body 1 and the pressure-relief member 2. For example, the pressure-relief member 2 is annealed so that the strength of the pressure-relief member 2 is appropriately reduced to facilitate timely bursting of the pressure-relief member 2 at the groove 221 when the gas pressure inside the cell 100 is too large.

In some embodiments, the ratio of the depth of the groove 221 to the thickness of the body portion 22 is in a range of 0.4~0.8. The depth of the groove 221 is set based on the range, thereby ensuring that the pressure-relief member 2 has a certain degree of strength. Therefore, when the electrode core 30 operates normally, the pressure-relief member 2 will not break, and when there is a short circuit in the electrode core 30 or in other special circumstances, it can timely burst at the groove 221.

In some embodiments, the groove 221 is provided on a side of the pressure-relief member 2 away from the electrode core 30, i.e., the groove 221 is provided on a side of the pressure-relief member 2 facing the outside of the cell 100. The surface at the groove 221 is uneven, and the electrolyte in the cell 100 is likely to corrode the uneven surface. Therefore, in the embodiments, the groove 221 is provided on the outer side of the cell 100, which can prevent the electrolyte from corroding the groove 221, and thus ensure the structural reliability of the cell 100.

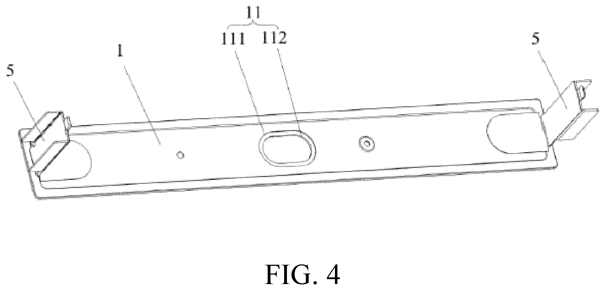

In some embodiments, as shown in FIG. 4, the mounting hole 11 is a stepped hole. The stepped hole includes a first hole 111 and a second hole 112. The first hole 111 is provided on a side of the cover plate body 1 closer to the electrode core 30, the cross-sectional area of the first hole 111 is larger than that of the second hole 112, and the pressure-relief member 2 is provided in the first hole 111. Therefore, the step formed by the first hole 111 and the second hole 112 can play a role in position limiting the pressure-relief member 2, thereby ensuring the positional accuracy of the installation of the pressure-relief member 2. In the embodiments, the pressure-relief member 2 is welded to the cover plate body 1 after being placed in the first hole 111.

In some embodiments, as shown in FIG. 1, the cover plate assembly 10 further includes a protective film 3, and the protective film 3 is configured to close the second hole 112, thereby preventing external impurities from being deposited in the groove 221 of the pressure-relief member 2, and ensuring the reliability of the pressure-relief member 2.

A cavity may be formed and enclosed between the pressure-relief member 2, the inner wall of the mounting hole 11, and the protective film 3. The gas pressure within the cavity will change with the use of the cell 100, thereby causing the protective film 3 to be pulled. In some embodiments, the protective film 3 in the embodiments is provided with an aerated hole 31, and the aerated hole 31 is provided such that the gas pressure within the above cavity can be ensured to be balanced with the external atmosphere, thereby preventing the protective film 3 from being pulled and broken.

## Claims

1. A cover plate assembly (10), configured to close a housing (20) containing an electrode core (30), comprising:

   a support body (101);
   wherein a groove (221) is provided in the support body (101), and an area formed and enclosed by an inner ring of the groove (221) is defined as S, S satisfying:

   $$S = \frac{K \times C}{T \times V},$$

   wherein K is a gas production coefficient of the electrode core (30), C is a capacity of the electrode core (30); T is pressure-relief time; and V is a pressure-relief speed.

2. The cover plate assembly (10) according to claim 1, wherein the gas production coefficient K of the electrode core (30) = 0.20~2.5; or/and, the pressure-relief time T = 10s~30s; or/and, the pressure-relief speed V = 1m/s~17m/s.

3. The cover plate assembly (10) according to claim 1, wherein the groove (221) comprises two semi-circular arc segments (2211) and two straight-line segments (2212), and the semi-circular arc segments (2211) and the straight-line segments (2212) are alternately provided and sequentially connected to form a closed shape.

4. The cover plate assembly (10) according to claim 1, wherein the groove (221) is provided on a side of the support body (101) away from the electrode core (30).

5. The cover plate assembly (10) according to any one of claims 1 to 4, wherein the support body (101) comprises:

a cover plate body (1), wherein a mounting hole (11) is provided in the cover plate body (1); and
a pressure-relief member (2) closing the mounting hole (11), wherein the groove (221) is provided in the pressure-relief member (2).

6. The cover plate assembly (10) according to claim 5, wherein the groove (221) is provided in a body portion (22) of the pressure-relief member (2), and a ratio of a depth of the groove (221) to a thickness of the body portion (22) is in a range of 0.4~0.8.

7. The cover plate assembly (10) according to claim 5, wherein a maximum size of the closed shape of the groove (221) in a first direction is L1, a maximum size of the closed shape of the groove (221) in a second direction is L2, and the cover plate body (1) has a size B in the first direction and a size W in the second direction; wherein B ≥ L1+5 mm, and W ≥ L2+5 mm.

8. The cover plate assembly (10) according to claim 5, wherein the area S enclosed by the inner ring of the groove (221) is:

$$S = \frac{K \times C}{T \times V}$$

wherein L1 is a maximum size of the closed shape of the groove (221) in a first direction, L2 is a maximum size of the closed shape of the groove (221) in a second direction, and the first direction and the second direction are two directions perpendicular to each other in a plane in which the cover plate body (1) is located

9. The cover plate assembly (10) according to claim 5, wherein the mounting hole (11) is a stepped hole; the stepped hole comprises a first hole (111) and a second hole (112), the first hole (111) is provided on a side of the cover plate body (1) closer to the electrode core (30), a cross-sectional area of the first hole (111) is larger than that of the second hole (112), and the pressure-relief member (2) is provided in the first hole (111).

10. The cover plate assembly (10) according to claim 9, further comprising a protective film (3) configured to close the second hole (112).

11. The cover plate assembly (10) according to claim 10, wherein a cavity is formed and enclosed between the pressure-relief member (2), an inner wall of the mounting hole (11), and the protective film (3).

12. The cover plate assembly (10) according to claim 11, wherein an aerated hole (31) is provided in the protective film (3).

13. The cover plate assembly (10) according to claim 5, wherein the pressure-relief member (2) comprises:

a body portion (22), wherein the groove (221) is provided in the body portion (22); and
a connection portion (21), disposed around the body portion (22), wherein a thickness of the connection portion (21) is greater than that of the body portion (22), and the connection portion (21) is welded with the cover plate body (1).

14. The cover plate assembly (10) according to claim 5, wherein the pressure-relief member (2) and the cover plate body (1) are made of aluminium.

15. The cover plate assembly (10) according to claim 14, wherein the pressure-relief member (2) is an annealed component after annealing treatment.

16. The cover plate assembly (10) according to any one of claims 1 to 4, wherein the support body (101) is a separate plate member, and the groove (221) is provided in the plate member.

**17.** A cell (100), comprising a housing (20), an electrode core (30), and the cover plate assembly (10) according to any one of claims 1 to 16;

wherein an opening is on a side of the housing (20), the electrode core (30) is disposed within the housing (20), and the cover plate assembly (10) is configured to close the opening.

**18.** The cell (100) according to claim 17, wherein the cover plate assembly (10) further comprises one or more poles (4), and the one or more poles (4) are inserted through a support body (101).

**19.** The cell (100) according to claim 18, wherein the cover plate assembly (10) further comprises one or more pins (5), and the one or more pins (5) are connected to the one or more poles (4) and the electrode core (30).

**20.** The cell (100) according to claim 17, wherein the cell (100) is a rectangle-shaped cell.

FIG. 1

FIG. 2

FIG. 3

FIG. 4

## INTERNATIONAL SEARCH REPORT

| International application No. |
| --- |
| **PCT/CN2024/100365** |

| A. | CLASSIFICATION OF SUBJECT MATTER |
| --- | --- |

H01M50/342(2021.01)i; H01M50/143(2021.01)i; H01M50/15(2021.01)i; H01M10/04(2006.01)i; F16K17/00(2006.01)i; F16K17/40(2006.01)i

According to International Patent Classification (IPC) or to both national classification and IPC

| B. | FIELDS SEARCHED |
| --- | --- |

Minimum documentation searched (classification system followed by classification symbols)

IPC: H01M F16K

Documentation searched other than minimum documentation to the extent that such documents are included in the fields searched

Electronic data base consulted during the international search (name of data base and, where practicable, search terms used)

CNKI, CNABS, CNTXT, DWPI, WPABS, ENTXT, ISI WEB OF SCIENCE: 湖北亿纬动力有限公司, 贺孝武, 舒宽金, 郑旭, 安苏礼, 吴雪银, 黃金海, 王俊敏, 何巍, 电池, 电芯, 盖, 外壳, 壳体, 刻痕, 沟, 槽, 凹痕, 防爆, 抗爆, 阻爆, 面积, 直径, 半径, battery, cell, shell, cover+, cavity, indenture, trough, groove, explosion, proof, prevent+, area, diameter, radius, semidiameter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114628846 A (BYD CO., LTD.) 14 June 2022 (2022-06-14)<br>description, paragraphs [0025]-[0027], [0044], [0056]-[0060], and [0081], and figures 1 and 5 | 1-20 |
| X | CN 114628845 A (BYD CO., LTD.) 14 June 2022 (2022-06-14)<br>description, paragraphs [0027]-[0030], and [0047], and [0059]-[0061], and figures 1, 5, and 11-12 | 1-20 |
| PX | CN 220138597 U (EVE ENERGY CO., LTD.) 05 December 2023 (2023-12-05)<br>description, paragraphs [0004]-[0023] and [0039]-[0056] | 1-20 |
| A | CN 216120620 U (XIAMEN HAICHEN NEW ENERGY TECHNOLOGY CO., LTD.) 22 March 2022 (2022-03-22)<br>entire document | 1-20 |
| A | CN 216773452 U (SHENZHEN BAK POWER BATTERY CO., LTD.) 17 June 2022 (2022-06-17)<br>entire document | 1-20 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 July 2024** | **21 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/100365** |

**C.      DOCUMENTS CONSIDERED TO BE RELEVANT**

| Category* | Citation of document, with indication, where appropriate, of the relevant passages | Relevant to claim No. |
|---|---|---|
| A | JP 2001023595 A (MATSUSHITA ELECTRIC INDUSTRIAL CO., LTD.) 26 January 2001 (2001-01-26)<br>        entire document | 1-20 |

Form PCT/ISA/210 (second sheet) (July 2022)

## INTERNATIONAL SEARCH REPORT
### Information on patent family members

| International application No. |
| --- |
| **PCT/CN2024/100365** |

| Patent document cited in search report | | | Publication date (day/month/year) | Patent family member(s) | | | Publication date (day/month/year) |
| --- | --- | --- | --- | --- | --- | --- | --- |
| CN | 114628846 | A | 14 June 2022 | CN | 114628846 | B | 09 September 2022 |
| | | | | WO | 2023217245 | A1 | 16 November 2023 |
| CN | 114628845 | A | 14 June 2022 | CN | 114628845 | B | 09 September 2022 |
| | | | | WO | 2023217244 | A1 | 16 November 2023 |
| CN | 220138597 | U | 05 December 2023 | | None | | |
| CN | 216120620 | U | 22 March 2022 | US | 2023123149 | A1 | 20 April 2023 |
| CN | 216773452 | U | 17 June 2022 | | None | | |
| JP | 2001023595 | A | 26 January 2001 | | None | | |

Form PCT/ISA/210 (patent family annex) (July 2022)

**EP 4 614 707 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202321588793